(19) Europäisches Patentamt
European Patent Office
Office européen des brevets

(11) EP 4 726 800 A1

(12) EUROPEAN PATENT APPLICATION

(43) Date of publication:
**15.04.2026 Bulletin 2026/16**

(21) Application number: **25207392.9**

(22) Date of filing: **08.10.2025**

(51) International Patent Classification (IPC):
***H01M 4/131*** *(2010.01)* ***H01M 10/0567*** *(2010.01)*
***H01M 10/0569*** *(2010.01)*

(52) Cooperative Patent Classification (CPC):
**H01M 10/0567; H01M 4/131; H01M 10/0569**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.10.2024 KR 20240137953**

(71) Applicant: **SAMSUNG SDI CO., LTD.**
**Yongin-si, Gyeonggi-do 17084 (KR)**

(72) Inventors:
- **YANG, Ye Ji**
  **16678 Gyeonggi-do (KR)**
- **KIM, Sang Hoon**
  **16678 Gyeonggi-do (KR)**
- **CHOI, Hyun Bong**
  **16678 Gyeonggi-do (KR)**
- **PARK, Sang Woo**
  **16678 Gyeonggi-do (KR)**
- **JI, Woo Jung**
  **16678 Gyeonggi-do (KR)**
- **KIM, So Hee**
  **16678 Gyeonggi-do (KR)**
- **PARK, Hong Ryeol**
  **16678 Gyeonggi-do (KR)**
- **JUN, Da Sol**
  **16678 Gyeonggi-do (KR)**
- **SHIN, Young Kyeong**
  **16678 Gyeonggi-do (KR)**
- **LIM, Sei Yeon**
  **16678 Gyeonggi-do (KR)**
- **KIM, Sun Dae**
  **16678 Gyeonggi-do (KR)**
- **JEONG, Eui Soo**
  **16678 Gyeonggi-do (KR)**

(74) Representative: **Michalski Hüttermann & Partner Patentanwälte mbB**
**Kaistraße 16A**
**40221 Düsseldorf (DE)**

# (54) ELECTROLYTE FOR RECHARGEABLE LITHIUM BATTERY AND RECHARGEABLE LITHIUM BATTERY INCLUDING THE SAME

(57) An electrolyte for a rechargeable lithium battery and a rechargeable lithium battery including the same are provided. The electrolyte includes a non-aqueous organic solvent; a lithium salt; and an additive, and the additive includes a mixture of a first additive represented by Chemical Formula 1 and a second additive represented by Chemical Formula 2.

FIG. 1

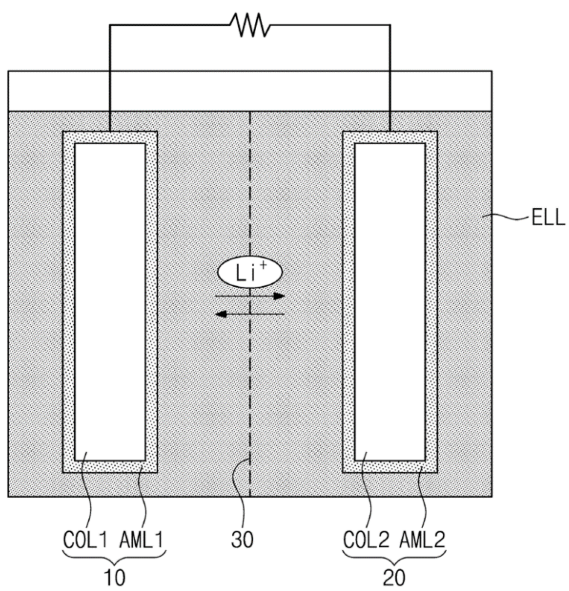


EP 4 726 800 A1

## Description

### CROSS-REFERENCE TO RELATED APPLICATION

The present application claims priority to and the benefit of Korean Patent Application No. 10-2024-0137953, filed on October 10, 2024, in the Korean Intellectual Property Office, the entire disclosure of which is incorporated herein by reference.

### BACKGROUND

#### 1. Field

The present disclosure relates to an electrolyte for a rechargeable lithium battery and a rechargeable lithium battery including the same.

#### 2. Discussion of Related Art

In recent years, with the rapid spread of electronic devices using batteries, such as mobile phones, laptop computers, electric vehicles, and/or the like, the demand for rechargeable batteries with high energy density and high capacity has rapidly increased. Accordingly, research and development for improving the performance of rechargeable lithium batteries is actively underway.

A rechargeable lithium battery is a battery that includes positive and negative electrodes that include active materials capable of intercalation and deintercalation of lithium ions, and an electrolyte, and produces electrical energy through oxidation and reduction reactions if (e.g., when) the lithium ions are intercalated/deintercalated into/from the positive and negative electrodes.

As the electrolyte of such rechargeable lithium batteries, an electrolyte in which a lithium salt is dissolved in a non-aqueous organic solvent is used. Rechargeable lithium batteries exhibit battery characteristics through complex reactions between the positive electrode and the electrolyte, between the negative electrode and the electrolyte, and/or the like. Therefore, the use of an appropriate electrolyte is one of the important parameters in improving the performance of rechargeable lithium batteries.

### SUMMARY

One or more aspects of embodiments of the present disclosure are directed to providing an electrolyte for a rechargeable lithium battery having an improved high-voltage lifespan and improved high-temperature performance in a rechargeable lithium battery including a cobalt-free positive electrode active material.

One or more aspects of embodiments of the present disclosure are directed to providing a rechargeable lithium battery including the electrolyte.

Additional aspects will be set forth in part in the description which follows and, in part, will be apparent from the description, or may be learned by practice of the presented embodiments of the disclosure.

According to an aspect of the present disclosure, there is provided an electrolyte for a rechargeable lithium battery, which includes a non-aqueous organic solvent; a lithium salt; and an additive, wherein the additive includes a mixture of a first additive represented by the following Chemical Formula 1 and a second additive represented by the following Chemical Formula 2:

**Chemical Formula 1**

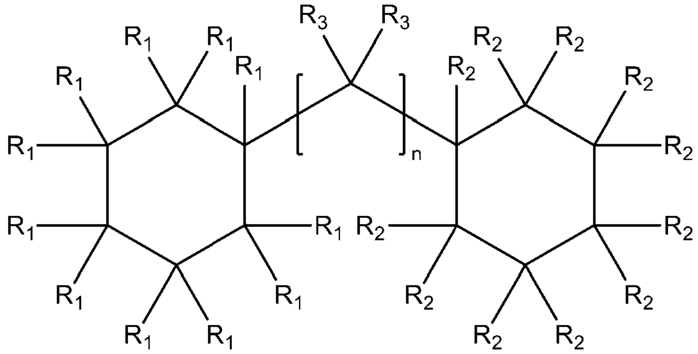

wherein:

each $R_1$ is the same or different, and may independently be (e.g., represent) hydrogen, a halogen, an alkyl group having 1 to 10 carbon atoms, or an isocyanate group, and at least one $R_1$ may be an isocyanate group,
each $R_2$ is the same or different, and may independently be (e.g., represent) hydrogen, a halogen, an alkyl group having 1 to 10 carbon atoms, or an isocyanate group; and at least one $R_2$ may be an isocyanate group,
each $R_3$ is the same or different, and may independently be (e.g., represent) hydrogen or a cyclohexyl isocyanate residue, and
n is an integer from 1 to 10,

**Chemical Formula ]**

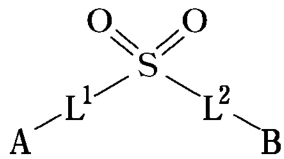

wherein:

$L^1$ and $L^2$ may each independently be a single bond, a substituted or unsubstituted C1 to C5 alkylene group, a substituted or unsubstituted C2 to C5 alkenylene group, a substituted or unsubstituted C2 to C5 alkynylene group, or a substituted or unsubstituted C6 to C20 arylene group, and
A and B may each independently be a substituted or unsubstituted C1 to C20 alkyl group, a substituted or unsubstituted C6 to C20 aryl group, or a substituted or unsubstituted C2 to C20 heteroaryl group, and
at least one of (e.g., selected from among) A and B may be a group represented by the following Chemical Formula A:

**Chemical Formula A**

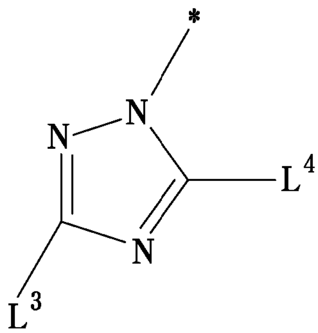

wherein:
$L^3$ and $L^4$ may each independently be hydrogen, a halogen, a substituted or unsubstituted C1 to C10 alkyl group, or a substituted or unsubstituted C3 to C10 cycloalkyl group.

According to another aspect of the present disclosure, there is provided a rechargeable lithium battery including the electrolyte, wherein the rechargeable lithium battery includes a positive electrode including a cobalt-free positive electrode active material; a negative electrode including a negative electrode active material; and an electrolyte.

## BRIEF DESCRIPTION OF THE DRAWINGS

The accompanying drawings are included to provide a further understanding of the present disclosure and are incorporated in and constitute a part of the present disclosure. The drawings illustrate embodiments of the present disclosure and, together with the description, serve to explain principles of the present disclosure. The preceding and other aspects, features, and advantages of certain embodiments of the disclosure will be more apparent from the following description taken in conjunction with the accompanying drawings, in which:

FIG. 1 is a conceptual diagram schematically showing a rechargeable lithium battery according to one or more embodiments of the present disclosure.

FIGS. 2 to 5 are cross-sectional views schematically showing rechargeable lithium batteries according to embodiments.

## DETAILED DESCRIPTION

In order to fully understand the configurations and effects of the present disclosure, preferred embodiments of the present disclosure will be described with reference to the accompanying drawings. However, it should be understood that the embodiments disclosed herein may be embodied in one or more suitable forms and modified in one or more suitable ways without being limited to the embodiments described herein. However, the description of the present embodiments is provided only to ensure that the disclosure of the present disclosure is made complete, and to fully inform a person having ordinary skill in the art to which the present disclosure belongs of the scope of the present disclosure.

In the present specification, when any component is referred to as being "on" another component, it means (e.g., refers to) that the component may be formed directly on the other component or a third component may be interposed therebetween. Also, in the drawings, the thicknesses of components are exaggerated for the effective description of the technical contents. Throughout the present specification, parts denoted by the same reference numerals denote the same components, and duplicative descriptions thereof may not be provided.

Unless otherwise specified in the present specification, anything indicated in the singular may also include the plural. In some embodiments, unless otherwise particularly stated herein, "A or B" may mean (e.g., refer to) "including A, including B, or including A and B." As used in the present specification, the terms "comprise/include," ""comprises/includes," and/or "comprising/including," "have," "having," and/or "has," do not exclude the presence or addition of one or more other components and are intended to designate the presence of an embodied aspect, number, step (e.g., act or task), element, and/or a (e.g., any suitable) combination thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof. Moreover, in this context, "consisting essentially of" indicates that any additional components will not materially affect the chemical, physical, or electrical properties of the electrolyte.

In the present specification, the term "combination thereof" may refer to a mixture, laminate, composite, copolymer, alloy, blend, reaction product, and/or the like of components.

In one or more embodiments, the term "layer" herein includes not only a shape formed or provided on the whole surface if (e.g., when) viewed from a plan view, but also a shape formed or provided on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views

of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In the context of the present application and unless otherwise defined, the terms "use," "using," and "used" may be considered synonymous with the terms "utilize," or "utilization," "utilizing," and "utilized," respectively.

Unless otherwise defined in the present specification, the term "substituted" means (e.g., refers to) that at least one hydrogen in a substituent or compound is replaced with deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

Specifically, the term "substituted" may mean (e.g., refer to) that at least one hydrogen in a substituent or compound is replaced with deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may mean (e.g., refer to) that at least one hydrogen in a substituent or compound is replaced with deuterium, a halogen group, a C1 to C20 alkyl group, a C6 to C30 aryl group, a C1 to C10 fluoroalkyl group, or a cyano group. Alternatively, the term "substituted" may mean (e.g., refer to) that at least one hydrogen in the substituent or compound is replaced with deuterium, a halogen group, a C1 to C5 alkyl group, a C6 to C18 aryl group, a C1 to C5 fluoroalkyl group, or a cyano group. As an example, the term "substituted" may mean (e.g., refer to) that at least one hydrogen in the substituent or compound is replaced with deuterium, a cyano group, a halogen group, a methyl group, an ethyl group, a propyl group, a butyl group, a phenyl group, a biphenyl group, a terphenyl group, a trifluoromethyl group, or a naphthyl group.

Unless otherwise particularly defined in the present specification, the symbol "*" refers to a moiety that is connected to the same or different atom or chemical formula. Unless specifically mentioned in the chemical formulas described in the present specification, it may be seen that hydrogen is bonded in the structure of the chemical formula.

**Description of FIG. 1**

FIG. 1 is a conceptual diagram schematically showing a rechargeable lithium battery according to one or more embodiments of the present disclosure. Referring to FIG. 1, the rechargeable lithium battery may include a positive electrode 10, a negative electrode 20, a separator 30, and an electrolyte (ELL).

The positive electrode 10 and the negative electrode 20 may be spaced and/or apart from each other with the separator 30 interposed therebetween. The separator 30 may be arranged between the positive electrode 10 and the negative electrode 20. The positive electrode 10, the negative electrode 20 and the separator 30 may be in contact with the electrolyte (ELL). The positive electrode 10, the negative electrode 20 and the separator 30 may be impregnated with the electrolyte (ELL).

The electrolyte (ELL) may be a medium for transferring lithium ions between the positive electrode 10 and the negative electrode 20. In the electrolyte (ELL), the lithium ions may pass through the separator 30 to move toward the positive electrode 10 or the negative electrode 20.

**Positive electrode 10**

A positive electrode 10 for a rechargeable lithium battery may include a current collector (COLL) and a positive electrode active material layer (AML1) formed on the current collector (COL1). The positive electrode active material layer (AML1) includes a positive electrode active material and may further include a binder and/or a conductive material.

As an example, the positive electrode 10 may further include an additive that may act as a sacrificial positive electrode.

The content of the positive electrode active material in the positive electrode active material layer (AML1) may range from 90% by weight to 99.5% by weight based on 100% by weight of the positive electrode active material layer (AML1). The contents of the binder and conductive material may each range from 0.5% by weight to 5% by weight based on 100% by weight of the positive electrode active material layer (AML1).

The binder serves to adhere positive electrode active material particles to each other well and also to adhere the positive electrode active material to the current collector (COL1) well. Representative examples of the binder include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but the present disclosure is not limited thereto.

The conductive material is used to impart conductivity to the electrodes, and any material may be used as long as it is electronically conductive without causing chemical changes in the battery to be formed. Examples of the conductive material include carbon-based materials such as natural graphite, artificial graphite, carbon black, acetylene black, Ketjen black, carbon fibers, carbon nanofibers, carbon nanotubes, and/or the like; metal-based materials in the form of metal powder or metal fibers containing copper, nickel, aluminum, silver, and/or the like; conductive polymers such as polyphenylene derivatives and the like; or a mixture thereof.

Al may be used as the current collector (COL1), but the present disclosure is not limited thereto.

## Positive electrode active material

As the positive electrode active material in the positive electrode active material layer (AML1), a compound capable of reversible intercalation and deintercalation of lithium (lithiated intercalation compound) may be used. For example, at least one of a composite oxide of lithium and a metal selected from cobalt, manganese, nickel, and a combination thereof may be used.

The composite oxide may be a lithium transition metal composite oxide, and examples thereof include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following chemical formulas may be used: $Li_aA_{1-b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 \le f \le 2$); $Li_aFePO_4$ ($0.90 \le a \le 1.8$).

In the preceding chemical formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and $L^1$ may be Mn, Al, or a combination thereof.

As an example, the positive electrode active material may be a high-nickel positive electrode active material in which the content of nickel is 80 mol% or more, 85 mol% or more, 90 mol% or more, 91 mol% or more, or 94 mol% or more, and 99 mol% or less, based on 100 mol% of metals excluding lithium in the lithium transition metal composite oxide. The high-nickel positive electrode active material may achieve high capacity, and thus may be applied to high-capacity, high-density rechargeable lithium batteries.

## Negative electrode 20

A negative electrode 20 for a rechargeable lithium battery includes a current collector (COL2) and a negative electrode active material layer (AML2) arranged on the current collector (COL2). The negative electrode active material layer (AML2) includes a negative electrode active material, and may further include a binder and/or a conductive material.

For example, the negative electrode active material layer (AML2) may include 90% by weight to 99% by weight of the negative electrode active material, 0.5% by weight to 5% by weight of the binder, and 0% by weight to 5% by weight of the conductive material.

The binder serves to adhere negative electrode active material particles to each other well and also to adhere the negative electrode active material to the current collector (COL2) well. A non-aqueous binder, an aqueous binder, a dry binder, or a combination thereof may be used as the binder.

The non-aqueous binder includes polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If (e.g., when) the aqueous binder is used as the negative electrode binder, the aqueous binder may further include a cellulose-based compound capable of imparting viscosity. As the cellulose-based compound, one or more types (kinds) of carboxymethyl cellulose, hydroxypropylmethyl cellulose, methyl cellulose, or alkali metal salts thereof may be mixed and used. Na, K or Li may be used as the alkali metal.

The dry binder is a fiberizable polymeric material, and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrodes, and any material may be used as long as it is electronically conductive without causing chemical changes in the battery to be formed. Examples include carbon-based materials such as natural graphite, artificial graphite, carbon black, acetylene black, Ketjen black, carbon fibers, carbon nanofibers, carbon nanotubes, and/or the like; metal-based materials in the form of metal powder or metal fibers containing copper, nickel, aluminum, silver, and/or the like; conductive polymers such as polyphenylene derivatives and/or the like; or a mixture thereof.

A current collector selected from copper foil, nickel foil, stainless steel foil, titanium foil, a nickel foam, a copper foam, a polymer substrate coated with a conductive metal, and a combination thereof may be used as the current collector (COL2).

**Negative electrode active material**

The negative electrode active material in the negative electrode active material layer (AML2) includes a material capable of reversible intercalation/deintercalation of lithium ions, a lithium metal, an alloy of lithium and a metal, a material capable of doping and dedoping lithium, or a transition metal oxide.

The material capable of reversible intercalation/deintercalation of lithium ions may include a carbon-based negative electrode active material, for example, crystalline carbon, amorphous carbon, or a combination thereof. Examples of the crystalline carbon include graphite such as amorphous, plate-like, flaky, spherical, or fibrous natural or artificial graphite, and examples of the amorphous carbon include soft carbon or hard carbon, mesophase pitch carbide, calcined coke, and/or the like.

As the alloy of lithium and a metal, an alloy of lithium and a metal selected from among Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, a Si-based negative electrode active material or a Sn-based negative electrode active material may be used. The Si-based negative electrode active material may be silicon, a silicon-carbon composite, $SiO_x$ ($0 < x < 2$), a Si-Q alloy (wherein Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to one or more embodiments, the silicon-carbon composite may be in the form of silicon particles whose surfaces are coated with amorphous carbon. For example, the silicon-carbon composite may include a secondary particle (core) in which silicon primary particles are assembled, and an amorphous carbon coating layer (shell) arranged on the surface of the secondary particle. The amorphous carbon may also be located between the silicon primary particles, and for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer arranged on the surface of the core.

The Si-based negative electrode active material or the Sn-based negative electrode active material may be used in combination with a carbon-based negative electrode active material.

**Separator 30**

A separator 30 may be present between the positive electrode 10 and the negative electrode 20 depending on the type (kind) of rechargeable lithium battery. As the separator 30, polyethylene, polypropylene, polyvinylidene fluoride, or a multi-layer film of two or more layers thereof may be used. Of course, a mixed multi-layer film such as a polyethylene/-polypropylene two-layer separator, a polyethylene/polypropylene/polyethylene three-layer separator, a polypropylene/-polyethylene/polypropylene three-layer separator, and/or the like may also be used.

The separator 30 may include a porous substrate and a coating layer including an organic material, an inorganic material, or a combination thereof and arranged on one or both (e.g., opposite) surfaces of the porous substrate.

The porous substrate may be a polymer film formed of any one polymer selected from among polyolefins such as

polyethylene, polypropylene, and/or the like, polyesters such as polyethylene terephthalate, polybutylene terephthalate, polyethylene naphthalate and/or the like, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, glass fibers, Teflon, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but the present disclosure is not limited thereto.

The organic and inorganic materials may be present as a mixture in one coating layer, or may be present in a form in which a coating layer including an organic material and a coating layer including an inorganic material are laminated.

**Electrolyte (ELL)**

An electrolyte (ELL) for a rechargeable lithium battery includes a non-aqueous organic solvent and a lithium salt.

The non-aqueous organic solvent acts as a medium through which ions involved in the electrochemical reaction of the battery may move.

The non-aqueous organic solvent may be a carbonate-based, ester-based, ether-based, ketone-based, or alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), ethyl methyl carbonate (EMC), ethylene carbonate (EC), propylene carbonate (PC), butylene carbonate (BC), and/or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, and/or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, and/or the like may be used. Also, cyclohexanone and/or the like may be used as the ketone-based solvent. Ethyl alcohol, isopropyl alcohol, and/or the like may be used as the alcohol-based solvent, and nitriles such as R-CN (where R is a linear, branched, or cyclic hydrocarbon group having 2 to 20 carbon atoms and may include a double bond, an aromatic ring, or an ether group) and/or the like; amides such as dimethylformamide and/or the like; dioxolanes such as 1,3-dioxolane, 1,4-dioxolane, and/or the like; and sulfolanes may be used as the aprotic solvent.

The non-aqueous organic solvents may be used alone or in combination of two or more.

Also, if (e.g., when) the carbonate-based solvent is used, a cyclic carbonate and a chain carbonate may be used in combination, and the cyclic carbonate and the chain carbonate may be mixed in a volume ratio of 1:1 to 1:9.

The lithium salt is a material that is dissolved in an organic solvent and thus acts as a source of lithium ions in the battery, thereby allowing the basic operation of a rechargeable lithium battery, and acts to promote the movement of lithium ions between the positive and negative electrodes. Representative examples of the lithium salt may include one or more selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI), $LiC_4F_9SO_3$, $LiN(C_xF_{2x+1}SO_2)(C_yF_{2y+1}SO_2)$ (where x and y are integers from 1 to 20), lithium trifluoromethane sulfonate, lithium tetrafluoroethanesulfonate, lithium difluorobis(oxalato)borate (LiDFOB), lithium difluorobis(oxalato)phosphate (LiDFOP), and lithium bis(oxalato) borate (LiBOB).

Rechargeable lithium battery

Rechargeable lithium batteries may be classified into cylindrical, prismatic, pouch-type (kind), and coin-type (kind) rechargeable lithium batteries depending on the type (kind) of rechargeable lithium battery. FIGS. 2 to 5 are diagrams schematically showing rechargeable lithium batteries according to embodiments: The rechargeable lithium batteries can be said to be cylindrical, prismatic, and pouch-type (kind) batteries, as shown in FIG. 2, FIG. 3, and FIGS. 4 and 5, respectively. Referring to FIGS. 2 to 4, a rechargeable lithium battery 100 may include an electrode assembly 40 having a separator 30 interposed between a positive electrode 10 and a negative electrode 20, and a case 50 in which the electrode assembly 40 is built. The positive electrode 10, the negative electrode 20, and the separator 30 may be impregnated with an electrolyte (not shown). The rechargeable lithium battery 100 may include a sealing member 60 configured to seal the case 50 as shown in FIG. 2. Also, as shown in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include electrode tabs 70, i.e., a positive electrode tab 71 and a negative electrode tab 72, which serve as electrical paths configured to conduct current formed in the electrode assembly 40 to the outside.

Hereinafter, an electrolyte for a rechargeable lithium battery according to one or more embodiments of the present disclosure will be described in more detail.

The electrolyte for a rechargeable lithium battery according to one or more embodiments includes the herein-described non-aqueous organic solvent; a lithium salt; and an additive, wherein the additive includes a mixture of a first additive represented by Chemical Formula 1 described herein; and a second additive represented by Chemical Formula 2 described herein.

The electrolyte may be prepared by a method which includes dissolving a lithium salt in a non-aqueous organic solvent, adding a first additive and a second additive, and then performing a mixing process. The process of mixing the electrolyte is widely known in the electrolyte manufacturing field, and will be able to be appropriately selected and used by those skilled in the art.

The non-aqueous organic solvent according to one or more embodiments of the present disclosure may include one or more of the non-aqueous organic solvents described herein.

In one or more embodiments, the non-aqueous organic solvent may be a mixture including ethylene carbonate (EC):ethyl methyl carbonate (EMC):dimethyl carbonate (DMC) in a volume ratio of 10 to 30:20 to 50:20 to 50. Here, the volume ratio is a value based on a total of 100% by volume of ethylene carbonate (EC):ethyl methyl carbonate (EMC):dimethyl carbonate (DMC). Within the preceding ranges, the effect of the mixture of additives described herein may be easily achieved, and the reductive decomposition rate of the positive electrode may be slowed down in a rechargeable lithium battery including a nickel-manganese-based positive electrode active material described herein, thereby further improving the battery lifespan.

The lithium salt according to one or more embodiments of the present disclosure may include one or more selected from the group consisting of $LiPF_6$, $LiClO_4$, $LiBF_4$, lithium bis(fluorosulfonyl)imide (LiFSI), lithium bis(trifluoromethanesulfonyl)imide (LiTFSI), $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, and $LiC_4F_9SO_3$. According to one embodiment, $LiPF_6$ may be used as the lithium salt.

The concentration of the lithium salt may range from 0.1 M to 3.0 M. For example, the concentration of the lithium salt may be at least 0.5 M (e.g., or more), and at least 1.0 M (e.g., or more). The concentration of the lithium salt may be at most 3.0 M (e.g., or less), at most 2.5 M (e.g., or less), and at most 2.0 M (e.g., or less). In the present disclosure, if (e.g., when) the concentration of the lithium salt ranges from 0.1 M to 2.0 M, the conductivity of the electrolyte and the viscosity of the electrolyte may be appropriately maintained.

**Additives**

The additive according to one or more embodiments of the present disclosure includes a first additive described herein and a second additive described herein.

**First additive**

A first additive according to one or more embodiments of the present disclosure is represented by the following Chemical Formula 1:

[Chemical Formula 1]

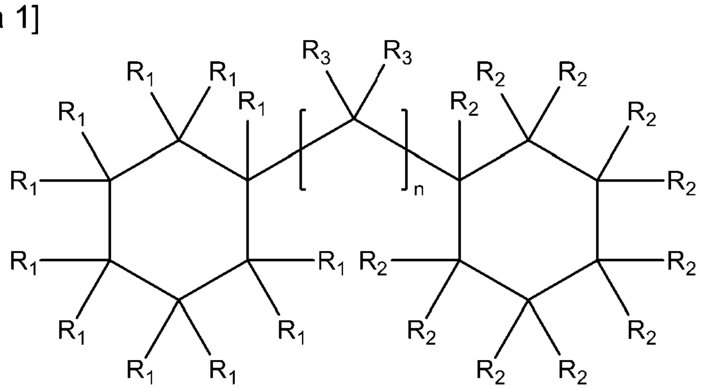

wherein:

each $R_1$ may be the same or different, and may independently represent hydrogen, a halogen, an alkyl group having 1 to 10 carbon atoms, or an isocyanate group, and at least one $R_1$ may be an isocyanate group,
each $R_2$ may be the same or different, and may independently represent hydrogen, a halogen, an alkyl group having 1 to 10 carbon atoms, or an isocyanate group, and at least one $R_2$ may be an isocyanate group,

each $R_3$ may be the same or different, and may independently represent hydrogen or a cyclohexyl isocyanate residue, and

n may be an integer from 1 to 10.

An additive according to another embodiment of the present disclosure may be represented by the following Chemical Formula 1-1:

**Chemical Formula 1-1**

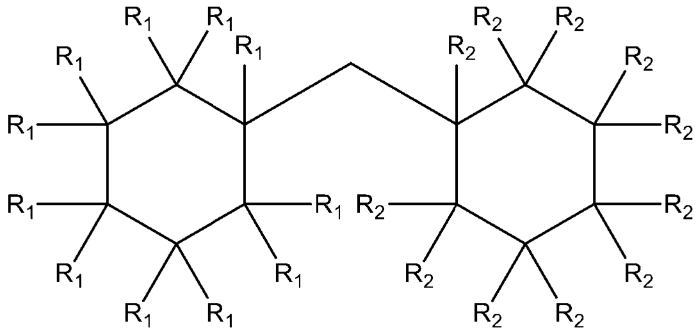

wherein:

each $R_1$ may be the same or different, and may independently represent hydrogen, a halogen, an alkyl group having 1 to 10 carbon atoms, or an isocyanate group, and at least one $R_1$ may be an isocyanate group, and

each $R_2$ may be the same or different, and may independently represent hydrogen, a halogen, an alkyl group having 1 to 10 carbon atoms, or an isocyanate group, and at least one $R_2$ may be an isocyanate group.

The first additive according to another embodiment of the present disclosure may be represented by the following Chemical Formula 1-2:

**Chemical Formula 1-2**

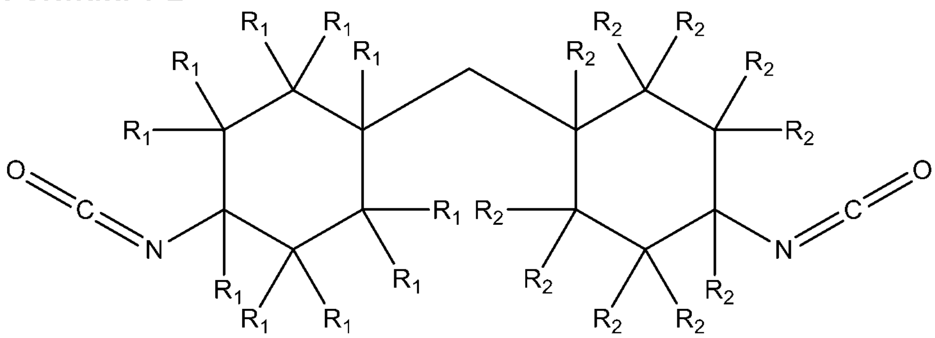

wherein:

each $R_1$ may be the same or different, and may independently represent hydrogen, a halogen, or an alkyl group having 1 to 10 carbon atoms, and

each $R_2$ may be the same or different, and may independently represent hydrogen, a halogen, or an alkyl group having 1 to 10 carbon atoms.

For example, the first additive may be a compound of the following Chemical Formula 1-3:

**Chemical Formula 1-3**

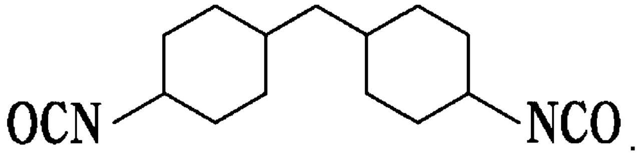

The additive according to another embodiment of the present disclosure may be represented by the following Chemical Formula 1-4:

**Chemical Formula 1-4**

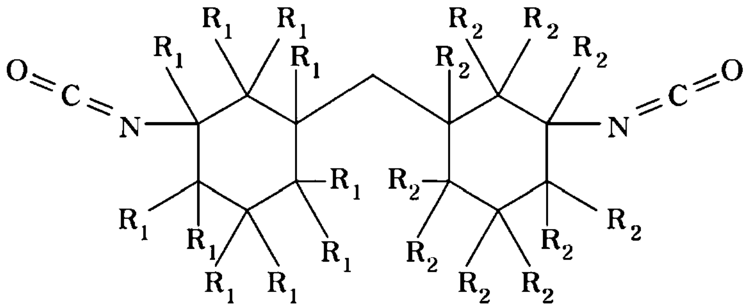

wherein:

each $R_1$ may be the same or different, and may independently represent hydrogen, a halogen, or an alkyl group having 1 to 10 carbon atoms, and
each $R_2$ may be the same or different, and may independently represent hydrogen, a halogen, or an alkyl group having 1 to 10 carbon atoms.

For example, the first additive may be a compound of the following Chemical Formula 1-5:

**Chemical Formula 1-5**

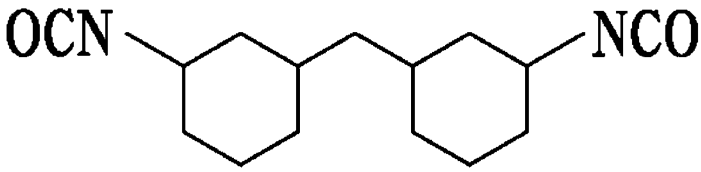

.

**Second additive**

A second additive according to one or more embodiments of the present disclosure is represented by the following Chemical Formula 2:

**Chemical Formula 2**

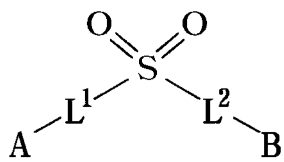

wherein:

$L^1$ and $L^2$ may each independently be a single bond, a substituted or unsubstituted C1 to C5 alkylene group, a substituted or unsubstituted C2 to C5 alkenylene group, a substituted or unsubstituted C2 to C5 alkynylene group, or a substituted or unsubstituted C6 to C20 arylene group, and
A and B may each independently be a substituted or unsubstituted C1 to C20 alkyl group, a substituted or unsubstituted C6 to C20 aryl group, or a substituted or unsubstituted C2 to C20 heteroaryl group, and
at least one of (e.g., selected from among) A and B may be a group represented by the following Chemical Formula A:

## Chemical Formula ]

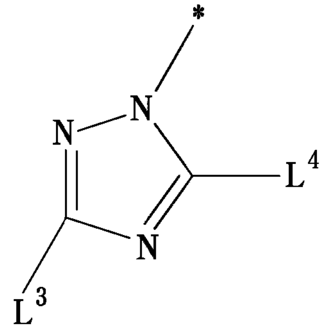

wherein:
$L^3$ and $L^4$ may each independently be hydrogen, a halogen, a substituted or unsubstituted C1 to C10 alkyl group, or a substituted or unsubstituted C3 to C10 cycloalkyl group.

As an example, at least one of (e.g., selected from among) $L^1$ and $L^2$ may be a substituted or unsubstituted C1 to C5 alkylene group.
As an example, $L^1$ and $L^2$ may each independently be a substituted or unsubstituted C1 to C5 alkylene group.
As an example, at least one of (e.g., selected from among) $L^1$ and $L^2$ may be a substituted or unsubstituted C2 to C5 alkylene group.
As an example, $L^1$ and $L^2$ may each independently be a substituted or unsubstituted C2 to C5 alkylene group.
For example, the second additive may be represented by the following Chemical Formula 2-1:

## Chemical Formula 2-1

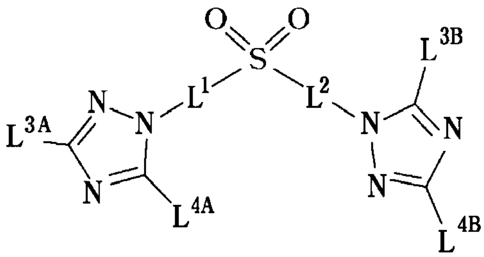

wherein:

$L^1$ and $L^2$ may each independently be a substituted or unsubstituted C2 to C5 alkylene group, and
$L^{3A}$, $L^{3B}$, $L^{4A}$, and $L^{4B}$ may each independently be hydrogen, a halogen, a substituted or unsubstituted C1 to C10 alkyl group, or a substituted or unsubstituted C3 to C10 cycloalkyl group.

In one embodiment, the second additive may include one or more compounds of the following Chemical Formulas 2-2 and 2-3:

## Chemical Formula 2-2

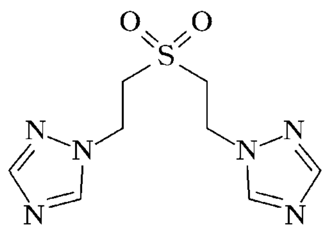

## Chemical Formula 2-3

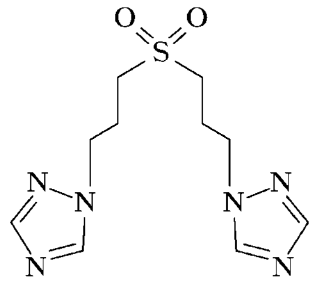

.

The additive according to one or more embodiments of the present disclosure includes a mixture of the first and second additives.

In rechargeable lithium batteries including a cobalt-free positive electrode active material, for example, a nickel-manganese-based positive electrode active material, electrolyte decomposition may be accelerated as nickel activity increases, and the surface of the negative electrode may be reduced after a large amount of nickel is eluted, thereby accelerating the deterioration of the battery lifespan. Also, the reductive decomposition of the positive electrode may be accelerated by accepting electrons from ethylene carbonate as a non-aqueous organic solvent in the electrolyte.

The mixture of the first additive and the second additive may improve battery lifespan under high-voltage conditions and significantly improve battery performance even under high-temperature conditions if (e.g., when) the mixture is applied as the additive in a rechargeable lithium battery including a nickel-manganese-based positive electrode active material. In particular, the mixture may improve the battery lifespan at a high voltage of at least 4.35 V (e.g., or higher) and significantly improve battery performance even under high-temperature conditions in a rechargeable lithium battery including a nickel manganese-based positive electrode active material.

In one embodiment, the mixture may be included in an amount of at least 95% by weight (or more), for example, 95 to 100% by weight or 100% by weight, (e.g., of the additives) in the electrolyte. Within the preceding range, the herein-described effect of the mixture may be achieved, and the side reactions of the electrolyte may be suppressed.

The first additive may be included in an amount of 0.05 to 5% by weight based on the total amount of the electrolyte. Within the preceding range, the herein-described effect of the mixture may be achieved. For example, the first additive may be included in an amount of 0.1 to 5% by weight, or 0.05 to 3% by weight based on the total amount of the electrolyte. If (e.g., when) the content of the first additive is in the preceding ranges, the herein-described effect of the mixture may be significantly enhanced, and there may be an additional effect of not increasing battery resistance.

The second additive may be included in an amount of 0.05 to 5% by weight based on the total weight of the electrolyte. Within the preceding range, the herein-described effect of the mixture may be achieved. For example, the second additive may be included in an amount of 0.1 to 1% by weight, or 0.05 to 3% by weight based on the total amount of the electrolyte. If (e.g., when) the content of the second additive is in the preceding ranges, the herein-described effect of the mixture may be significantly enhanced, the rapid charging effect may be improved, and there may be an additional effect of not increasing battery resistance.

In the electrolyte, the ratio (weight ratio) of the content of the first additive to the content of the second additive may range from 9:1 to 0.5:1. Within the preceding range, the herein-described effect of the mixture may be easily achieved.

According to one embodiment, the ratio (weight ratio) of the content of the first additive to the content of the second additive may range from 5:1 to 1:1, 5:1 to 0.5:1. Within the preceding ranges, there may be a resistance suppressing effect at high temperatures, and there may be no problem of rapidly decreasing the lifespan efficiency of the rechargeable lithium battery. For example, the weight ratio may be 2:1 to 0.5:1. Within the preceding range, the resistance suppressing effect at high temperatures and the lifespan efficiency improving effect may be remarkable.

Accordingly, if (e.g., when) the electrolyte according to the present disclosure includes a mixture of the first additive and the second additive in combination with the non-aqueous organic solvent and lithium salt, the electrolyte may simultaneously exhibit the effect of suppressing an increase in resistance if (e.g., when) stored at high temperatures in a rechargeable lithium battery including a cobalt-free positive electrode active material, particularly a nickel-manganese-based positive electrode active material, thereby enabling implementation of rechargeable lithium batteries having improved lifespan characteristics and stability.

In another embodiment of the present disclosure, there may be provided a rechargeable lithium battery, which includes a positive electrode including a positive electrode active material; a negative electrode including a negative electrode active material; and an electrolyte, wherein the electrolyte includes a non-aqueous organic solvent; a lithium salt; and an additive, and the additive includes a mixture of the herein-described first and second additives.

The rechargeable lithium battery may be applied to automobiles, mobile phones, and/or one or more suitable types (kinds) of electrical devices, but the present disclosure is not limited thereto.

The positive electrode active material may include a cobalt-free nickel-manganese-based oxide.

In the present specification, the cobalt-free nickel-manganese-based oxide as the positive electrode active material may refer to a positive electrode active material that does not include cobalt in a composition of the positive electrode active material and is composed of nickel and manganese as main ingredients.

In one embodiment, the cobalt-free nickel-manganese-based oxide may include at least one of the lithium composite oxides represented by the following Chemical Formula 3:

**Chemical Formula 3** $Li_aNi_xMn_yM1_zM2_wO_{2\pm b}X_c$

wherein:

a, b, c, w, x, y, and z may be defined as $0.9 \leq a < 1.2$, $0 \leq b < 0.1$, $0 \leq c < 0.1$, $0 \leq w < 0.1$, $0.05 \leq x < 1.0$, $0 < y < 0.4$, and $0 \leq z < 0.1$, and $w + x + y + z = 1$,

M1 and M2 may each independently be at least one element selected from among Al, Mg, Ti, Zr, Cr, Sr, V, B, W, Mo, Nb, Si, Ba, Ca, Ce, Cr, Fe, and Nb, and

X may be at least one element selected from among S, F, P, and Cl.

In Chemical Formula 3, x may be $0.05 \leq x \leq 0.95$, $0.6 \leq x < 1.0$.

A lithium composite oxide having a coating layer on a surface thereof may be used, or a mixture of the lithium composite oxide and a compound having a coating layer may also be used. This coating layer may include at least one coating element compound selected from the group consisting of an oxide of the coating element, a hydroxide of the coating element, an oxyhydroxide of the coating element, an oxycarbonate of the coating element, and a hydroxycarbonate of the coating element. The compound constituting these coating layers may be amorphous or crystalline. Mg, Al, K, Na, Ca, Si, Ti, V, Sn, Ge, Ga, B, As, Zr, or a mixture thereof may be used as the coating element included in the coating layer. In a process of forming the coating layer, any coating method may be used as long as the compound may be coated with these elements using methods (for example, spray coating, dipping, and/or the like) that do not adversely affect the physical properties of the positive electrode active material. In this case, the above contents are easily understood by those of ordinary skill in the art, and thus a detailed description thereof will not be provided.

As an example, the cobalt-free nickel-manganese-based oxide may be represented by the following Chemical Formula 4:

**Chemical Formula 4** $Li_aNi_{x1}Mn_{y1}Al_{z1}M2_{w1}O_{2\pm b}X_c$

wherein:

a, b, c, w1, x1, y1, and z1 may be defined as $0.9 \leq a < 1.2$, $0 \leq b < 0.1$, $0 \leq c < 0.1$, $0 \leq w1 < 0.1$, $0.05 \leq x1 < 1.0$, $0 < y1 < 0.4$, and $0 \leq z1 < 0.1$, and $w1 + x1 + y1 + z1 = 1$,

M2 may be at least one element selected from among Mg, Ti, Zr, Cr, Sr, V, B, W, Mo, Nb, Si, Ba, Ca, Ce, Cr, Fe, and Nb, and

X may be at least one element selected from among S, F, P, and Cl.

In Chemical Formula 4, x1 may be $0.05 \leq x1 \leq 0.95$.

In one embodiment, the cobalt-free nickel-manganese-based oxide may be included in an amount of 95% by weight or more, for example, 95 to 100% by weight or 100% by weight, of the positive electrode active material.

In one or more embodiments, the negative electrode active material may include at least one of graphite and a Si composite.

If (e.g., when) the negative electrode active material includes both (e.g., simultaneously) the Si composite and graphite, the Si composite and graphite may be included in the form of a mixture. In this case, the Si composite and graphite may be included in a weight ratio of 1:99 to 50:50 based on 100 parts by weight of the sum of the Si composite and graphite. For example, the Si composite and graphite may be included in a weight ratio of 3:97 to 20:80, 4:96 to 20:80, or 5:95 to 20:80.

The Si composite includes a core including Si-based particles and an amorphous carbon coating layer. For example, the Si-based particles may include at least one of a Si-C composite, $SiO_x$ ($0 < x \leq 2$), and a Si alloy. For example, the Si-C composite may include a core including Si particles and crystalline carbon, and an amorphous carbon coating layer arranged on a surface of the core.

The crystalline carbon may include, for example, graphite. For example, the crystalline carbon may include natural graphite, artificial graphite, or a mixture thereof.

If (e.g., when) the positive electrode includes a cobalt-free nickel-manganese-based oxide and/or the negative electrode includes graphite, the effect of improving the high-temperature stability of the rechargeable lithium battery may

be maximized. As the operating voltage of the rechargeable lithium battery including the above combination is at least 4.35 V (e.g., or higher), the rechargeable lithium battery may operate even at a high voltage.

Hereinafter, examples and comparative examples of the present disclosure will be described. However, it should be understood that the following examples are only examples of the present disclosure, and are not intended to limit the present disclosure.

## EXAMPLES AND COMPARATIVE EXAMPLES

### (1) Preparation of electrolyte

1.15 molarity (M) $LiPF_6$ was dissolved in a non-aqueous organic solvent mixed with a carbonate-based solvent in a volume ratio shown in Table 1, and a first additive and a second additive were added thereto, and then mixed to prepare an electrolyte. For example, the electrolytes according to the examples and comparative examples were prepared with the compositions shown in Table 1.

A compound represented by the following Chemical Formula 1-3 was used as the first additive; and a compound represented by the following Chemical Formula 2-2 was used as the second additive:

**Chemical Formula 1-3**

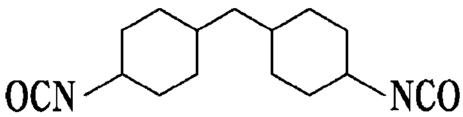

**Chemical Formula 2-2**

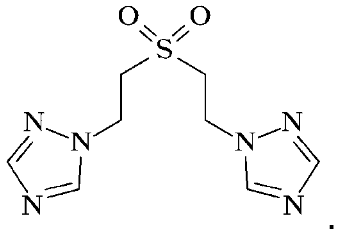

(2) Manufacture of rechargeable lithium battery

97% by weight of $LiNi_{0.75}Mn_{0.23}Al_{0.02}O_2$ as a positive electrode active material, 0.5% by weight of artificial graphite powder as a conductive material, 0.8% by weight of carbon black (Ketjen black), 0.2% by weight of an acrylonitrile rubber, and 1.5% by weight of polyvinylidene fluoride (PVdF) were mixed, and added to N-methyl-2-pyrrolidone (NMP). Then, the resulting mixture was stirred for 30 minutes using a mechanical stirrer to prepare a positive electrode active material slurry. The slurry was applied to a thickness of approximately 60 micrometer (μm) on a 20 μm-thick aluminum current collector using a doctor blade, dried in a hot air dryer at 100 °C for 0.5 hour, dried again *in vacuo* at 120 °C for 4 hours, and then roll-pressed to manufacture a positive electrode.

98% by weight of a negative electrode active material in which graphite and a Si composite were mixed in a weight ratio of 95.8:4.2, 1% by weight of a styrene-butadiene rubber (SBR), and 1% by weight of carboxymethyl cellulose (CMC) were mixed, and distilled water was added thereto. Then, the resulting mixture was stirred for 60 minutes using a mechanical stirrer to prepare a negative electrode active material slurry. The slurry was applied to a thickness of approximately 60 μm on a 10 μm-thick copper current collector using a doctor blade, dried in a hot air dryer at 100 °C for 0.5 hour, dried again *in vacuo* at 120 °C for 4 hours, and then roll-pressed to manufacture a negative electrode.

The positive electrode and/or the negative electrode were assembled with a separator made of polyethylene and having a thickness of 16 μm to manufacture an electrode assembly, and/or the electrolyte was injected to manufacture a cylindrical rechargeable lithium battery.

## EVALUATION EXAMPLES

The rechargeable lithium batteries were evaluated using the following methods.

**Evaluation 1: Capacity retention (Ret) and capacity recovery (Rec) after high-temperature storage**

The rechargeable lithium batteries of the examples and comparative examples were subjected to 0.5C CC/CV charging (3.65 V, 0.05C cut-off) and 0.5C CC discharging (2.5 V cut-off) at 25 °C, and this process was repeated three times. Then, the 3rd discharge capacity C1 was measured. The charged rechargeable lithium batteries were stored at 60 °C for 7 or 21 days, and then left at room temperature for another 30 minutes, followed by 0.5C CC discharging (2.5 V cut-off), and the discharge capacity C2 was measured. The capacity retention was calculated as follows. The results are listed in Table 2.

$$\text{Capacity retention (\%)} = C2/C1 \times 100(\%)$$

After measuring the capacity retention of the rechargeable lithium batteries of the examples and comparative examples in the same manner as described herein, the rechargeable lithium batteries were then subjected to 0.5C-rate CC/CV charging (3.65 V, 0.05C cut-off) and 0.5C-rate discharging (2.5 V cut-off) to measure the discharge capacity.

The capacity recovery was calculated as a percentage by dividing the discharge capacity after capacity retention measurement by the initial capacity measured herein.

Capacity recovery (%) = (Discharge capacity after capacity retention measurement/Initial capacity) × 100

**Evaluation 2: Evaluation of room-temperature charge/discharge cycle characteristics**

The room-temperature charge/discharge characteristics were evaluated for the rechargeable lithium batteries according to examples and comparative examples. For this purpose, the rechargeable lithium batteries were changed/-discharged 200 cycles under 0.33C charging (CC/CV, 4.45 V, 0.025C cut-off)/1.0C discharging (CC, 2.5 V cut-off) conditions at 25°C. The capacity retention was calculated according to the following equation.

Capacity retention (%) = (Discharge capacity after 200 cycles/Discharge capacity after one cycle) × 100

**Evaluation 3: Evaluation of high-temperature (45°C) charge/discharge cycle characteristics**

The high-temperature charge-discharge characteristics were evaluated for the rechargeable lithium batteries according to the examples and comparative examples. For this purpose, the rechargeable lithium batteries were charged/discharged for 200 cycles under 0.33C charging (CC/CV, 4.45 V, 0.025C cut-off)/1.0C discharging (CC, 2.5 V cut-off) conditions at 45°C. The capacity retention was calculated according to the following equation.

Capacity retention (%) = (Discharge capacity after 200 cycles/Discharge capacity after 1 cycle) × 100

**Evaluation 4: Evaluation of high-temperature (60°C) gas generation characteristics**

The high-temperature gas generation characteristics were evaluated for the rechargeable lithium batteries according to the examples and comparative examples. For this purpose, the maximum energy state inside the battery was made to be a fully charged state (SOC 100%). In this state, the gas generation amount (units: mL) was evaluated before storage (before storage at a high temperature (60°C)) and after storage at a high temperature (60°C) for 7 days. The gas generation ratio was measured by measuring a change in volume before and after storage at a high temperature, and converted into a mass change using Archimedes' principle.

The results of Evaluation 1 to Evaluation 4 are listed in Table 2.

Table 1

| | Lithium salt | Non-aqueous organic solvent | | | Additive | | |
|---|---|---|---|---|---|---|---|
| | $LiPF_6$ | EC | EMC | DMC | Chemical Formula 1-3 | Chemical Formula 2-2 | weight ratio* |
| Example 1 | 1.15 | 20 | 40 | 40 | 0.5 | 0.5 | 1:1 |
| Example 2 | 1.15 | 20 | 40 | 40 | 0.5 | 0.75 | 0.67:1 |
| Example 3 | 1.15 | 20 | 40 | 40 | 0.5 | 0.25 | 2:1 |

(continued)

| | Lithium salt | Non-aqueous organic solvent | | | Additive | | |
|---|---|---|---|---|---|---|---|
| | $LiPF_6$ | EC | EMC | DMC | Chemical Formula 1-3 | Chemical Formula 2-2 | weight ratio* |
| Example 4 | 1.15 | 20 | 40 | 40 | 0.75 | 0.5 | 1.5:1 |
| Example 5 | 1.15 | 20 | 40 | 40 | 0.25 | 0.5 | 0.5:1 |
| Comparative Example 1 | 1.5 | 20 | 40 | 40 | 0 | 0 | - |
| Comparative Example 2 | 1.15 | 20 | 40 | 40 | 0.5 | 0 | - |
| Comparative Example 3 | 1.15 | 20 | 40 | 40 | 0 | 0.5 | - |

*In Table 1, EC: ethylene carbonate, EMC: ethyl methyl carbonate, DMC: dimethyl carbonate,
*In Table 1, the weight ratio represents a weight ratio of Chemical Formula 1-3:Chemical Formula 2-2.
*In Table 1, the molar concentration (M) of the lithium salt represents an amount (moles) of a lithium salt dissolved per 1 L of electrolyte, the volume ratio of the non-aqueous organic solvent represents a volume ratio of EC:EMC:DMC, and the weight percentage of the additive represents a relative weight of the additive to a total of 100 weight % of the electrolyte (lithium salt + non-aqueous organic solvent) excluding the additive.

Table 2

| | Evaluation 1 60°C 7 days | | Evaluation 1 60°C 21 days | | Evaluation 2 | Evaluation 3 | Evaluation 4 | | |
|---|---|---|---|---|---|---|---|---|---|
| | Ret | Rec | Ret | Rec | | | Initial (mL) | 7 days (mL) | Gas generation ratio |
| Example 1 | 91.3 | 97.4 | 87.1 | 94.3 | 95.3 | 90.2 | 1.67 | 1.99 | 119.2% |
| Example 2 | 88.4 | 94.2 | 85.8 | 91.7 | 91.8 | 87.7 | 1.99 | 2.46 | 123.6% |
| Example 3 | 89.1 | 95.5 | 86.1 | 92.5 | 92.9 | 88.3 | 1.86 | 2.26 | 121.5% |
| Example 4 | 88.9 | 94.5 | 85.5 | 92.1 | 92.1 | 87.8 | 1.93 | 2.37 | 122.8% |
| Example 5 | 90.1 | 96.1 | 85.9 | 92.6 | 93.2 | 88.9 | 1.79 | 2.15 | 120.1% |
| Comparative Example 1 | 85.8 | 92.6 | 83.8 | 89.9 | 89.4 | 85.3 | 2.47 | 3.18 | 128.7% |
| Comparative Example 2 | 86.5 | 93.4 | 84.6 | 90.2 | 91.2 | 86.1 | 2.43 | 3.08 | 126.7% |
| Comparative Example 3 | 87.2 | 94 | 85.3 | 91.3 | 91.6 | 87.5 | 2.22 | 2.79 | 125.7% |

**Summary**

Referring to Table 2, based on the results of Evaluations 1 to 4, it may be sufficiently expected that the electrolytes of the examples can improve the high-voltage lifespan and high-temperature performance in a rechargeable lithium battery including a cobalt-free positive electrode active material.

However, referring to Table 2, based on the results of Evaluations 1 to 4, it may be expected that Comparative Examples 1 to 3, which do not include at least one of the first and second additives of the present disclosure, are very poor at improving the high-voltage lifespan and high-temperature performance in a rechargeable lithium battery including a cobalt-free positive electrode active material compared to the examples.

The electrolyte according to one or more embodiments may exhibit an effect of improving lifespan characteristics and stability under high-voltage conditions during rechargeable battery activation in a rechargeable lithium battery

including a cobalt-free positive electrode active material.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

A battery manufacturing device, a battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

Descriptions of features or aspects within each embodiment should typically be considered as available for other similar features or aspects in other embodiments.

Although the preferred embodiments of the present disclosure have been described herein, the present disclosure is not limited thereto. Therefore, it should be understood that one or more suitable changes and modifications can be made by those skilled in the art to which the present disclosure pertains within the scope of the claims, the detailed description of the present disclosure, and the accompanying drawings, which also fall within the scope of the present disclosure.

## Claims

**1.** An electrolyte (ELL) comprising:

a non-aqueous organic solvent;
a lithium salt; and
an additive
wherein,
the additive comprises a mixture of a first additive represented by Chemical Formula 1 and a second additive represented by Chemical Formula 2:

**Chemical Formula 1**

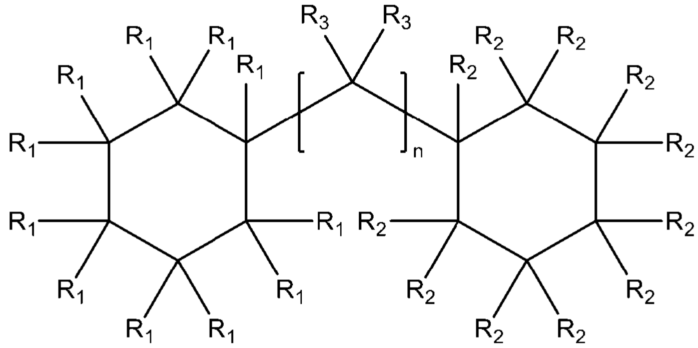

wherein:

each $R_1$ is the same or different, and is independently hydrogen, a halogen, an alkyl group having 1 to 10 carbon atoms, or an isocyanate group; and at least one $R_1$ is an isocyanate group,
each $R_2$ is the same or different, and is independently hydrogen, a halogen, an alkyl group having 1 to 10 carbon atoms, or an isocyanate group; and at least one $R_2$ is an isocyanate group,
each $R_3$ is the same or different, and is independently hydrogen or a cyclohexyl isocyanate residue, and
n is an integer from 1 to 10

## Chemical Formula 2

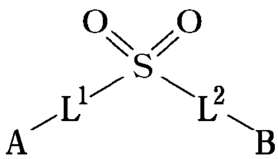

wherein:

$L^1$ and $L^2$ are each independently a single bond, a substituted or unsubstituted C1 to C5 alkylene group, a substituted or unsubstituted C2 to C5 alkenylene group, a substituted or unsubstituted C2 to C5 alkynylene group, or a substituted or unsubstituted C6 to C20 arylene group, and
A and B are each independently a substituted or unsubstituted C1 to C20 alkyl group, a substituted or unsubstituted C6 to C20 aryl group, or a substituted or unsubstituted C2 to C20 heteroaryl group, and
at least one selected from among A and B is a group represented by Chemical Formula A:

## [Chemical Formula A]

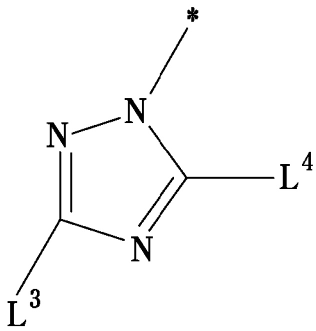

wherein:

$L^3$ and $L^4$ are each independently hydrogen, a halogen, a substituted or unsubstituted C1 to C10 alkyl group, or a substituted or unsubstituted C3 to C10 cycloalkyl group, and
wherein the electrolyte (ELL) is for a rechargeable lithium battery.

**2.** The electrolyte (ELL) as claimed in claim 1, wherein the first additive is represented by Chemical Formula 1-2:

## Chemical Formula 1-2

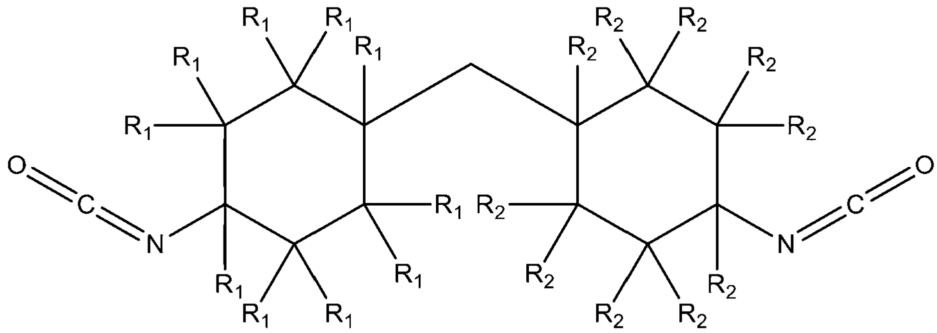

wherein:

each $R_1$ is the same or different, and is independently hydrogen, a halogen, or an alkyl group having 1 to 10 carbon atoms, and
each $R_2$ is the same or different, and is independently hydrogen, a halogen, or an alkyl group having 1 to 10 carbon atoms; or.
wherein the first additive is represented by Chemical Formula 1-3:

**Chemical Formula 1-3**

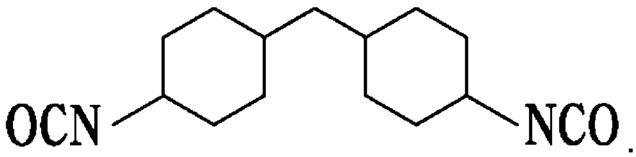

3. The electrolyte (ELL) as claimed in claim 1 or 2, wherein the second additive is represented by Chemical Formula 2-1:

**Chemical Formula 2-1**

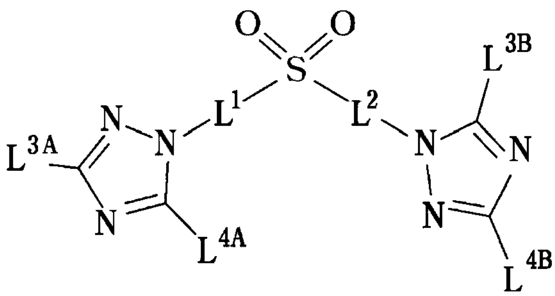

wherein:

$L^1$ and $L^2$ are each independently a substituted or unsubstituted C2 to C5 alkylene group, and
$L^{3A}$ $L^{3B}$ , $L^{4A}$, and $L^{4B}$ are each independently hydrogen, a halogen, a substituted or unsubstituted C1 to C10 alkyl group, or a substituted or unsubstituted C3 to C10 cycloalkyl group; or
wherein the second additive comprises at least one compound represented by Chemical Formulas 2-2 and 2-3:

**Chemical Formula 2-2**

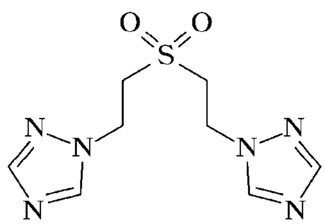

**Chemical Formula 2-3**

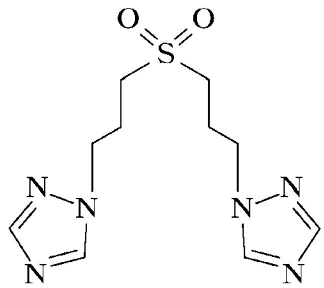

.

4. The electrolyte (ELL) as claimed in any one of claims 1 to 3, wherein the first additive is in an amount of 0.05% to 5% by weight based on a total amount of the electrolyte (ELL), and
the second additive is in an amount of 0.05% to 5% by weight based on the total amount of the electrolyte (ELL).

5. The electrolyte (ELL) as claimed in any one of claims 1 to 4, wherein a weight ratio of the first additive to the second additive is from 9:1 to 0.5:1.

6. The electrolyte (ELL) as claimed in any one of claims 1 to 5, wherein the mixture is in an amount of at least 95% by weight based on a total amount of the electrolyte (ELL).

7. The electrolyte (ELL) as claimed in any one of claims 1 to 6, wherein the non-aqueous organic solvent is a mixture comprising ethylene carbonate (EC):ethyl methyl carbonate (EMC):dimethyl carbonate (DMC) in a volume ratio of 10 to 30:20 to 50:20 to 50.

8. The electrolyte (ELL) as claimed in any one of claims 1 to 7, wherein the lithium salt is at least one selected from the group consisting of $LiPF_6$, $LiClO_4$, $LiBF_4$, (lithium bis(fluorosulfonyl)imide (LiFSI), LiTFSI, $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, $Li(FSO_2)_2N$, and $LiC_4F_9SO_3$.

9. The electrolyte (ELL) as claimed in any one of claims 1 to 8, wherein a concentration of the lithium salt is from 0.1 molarity (M) to 2.0 M.

10. A rechargeable lithium battery (100) comprising:

a positive electrode (10) comprising a positive electrode active material;
a negative electrode (20) comprising a negative electrode active material; and
the electrolyte (ELL) as claimed in any one of claims 1 to 9,
wherein the positive electrode active material comprises a cobalt-free positive electrode active material, wherein the cobalt-free positive electrode active material comprises preferably a cobalt-free nickel-manganese-based oxide.

11. The rechargeable lithium battery (100) as claimed in claim 10, wherein the cobalt-free nickel-manganese-based oxide comprises a lithium composite oxide represented by the following Chemical Formula 3:

**Chemical Formula 3** $Li_aNi_xMn_yM1_zM2_wO_{2\pm b}X_c$

wherein:

$$0.9 \leq a < 1.2,$$

$$0 \leq b < 0.1,$$

$$0 \leq c < 0.1,$$

$$0 \leq w < 0.1,$$

$$0.05 \leq x < 1.0,$$

$$0 < y < 0.4,$$

$$0 \leq z < 0.1,$$

$$w + x + y + z = 1,$$

M1 and M2 are each independently at least one element selected from among Al, Mg, Ti, Zr, Cr, Sr, V, B, W, Mo, Nb, Si, Ba, Ca, Ce, Cr, Fe, and Nb, and
X is at least one element selected from among S, F, P, and Cl.

**12.** The rechargeable lithium battery (100) as claimed in claim 11, wherein in Chemical Formula 3, x is $0.05 \leq x \leq 0.95$.

**13.** The rechargeable lithium battery (100) as claimed in any one of claims 10 to 12, wherein the negative electrode active material comprises at least one selected from among graphite and a Si composite.

**14.** The rechargeable lithium battery (100) as claimed in any one of claims 10 to 13, wherein the rechargeable lithium battery (100) has an operating voltage of at least 4.35 V.

**15.** The rechargeable lithium battery (100) as claimed in any one of claims 10 to 14, wherein the rechargeable lithium battery (100) is a cylindrical battery, a prismatic battery, a pouch-type battery, or a coin-type battery.

FIG. 1

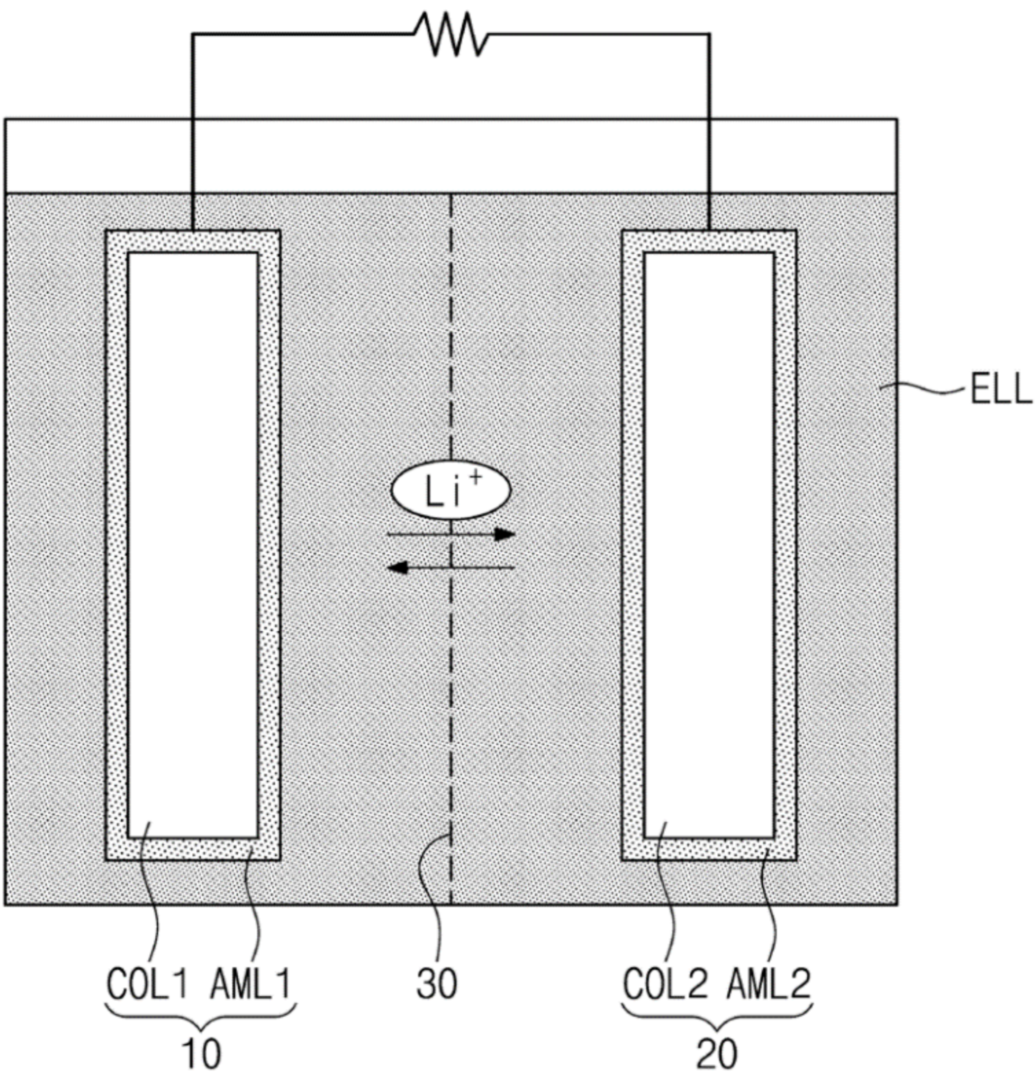

FIG. 2

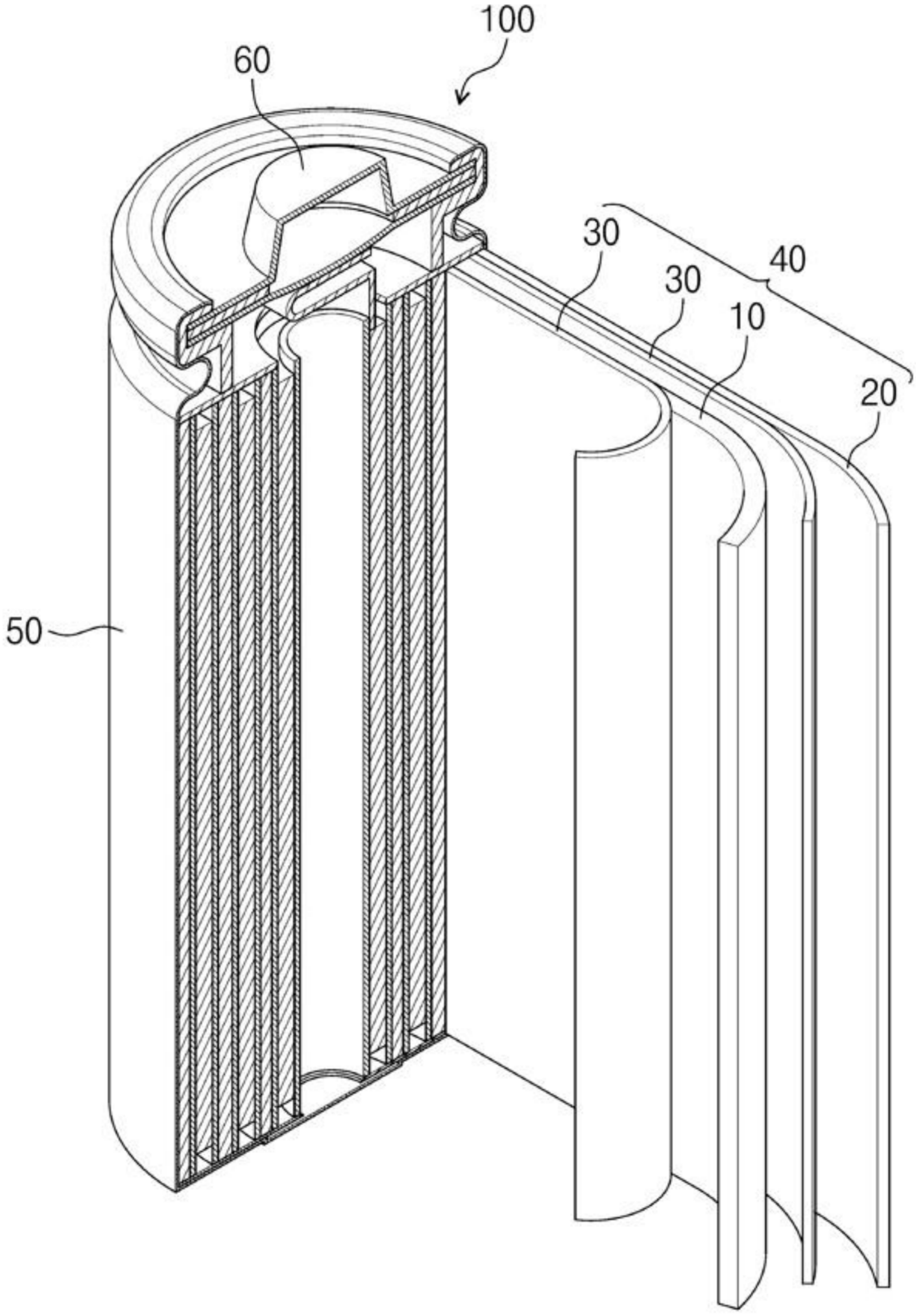

FIG. 3

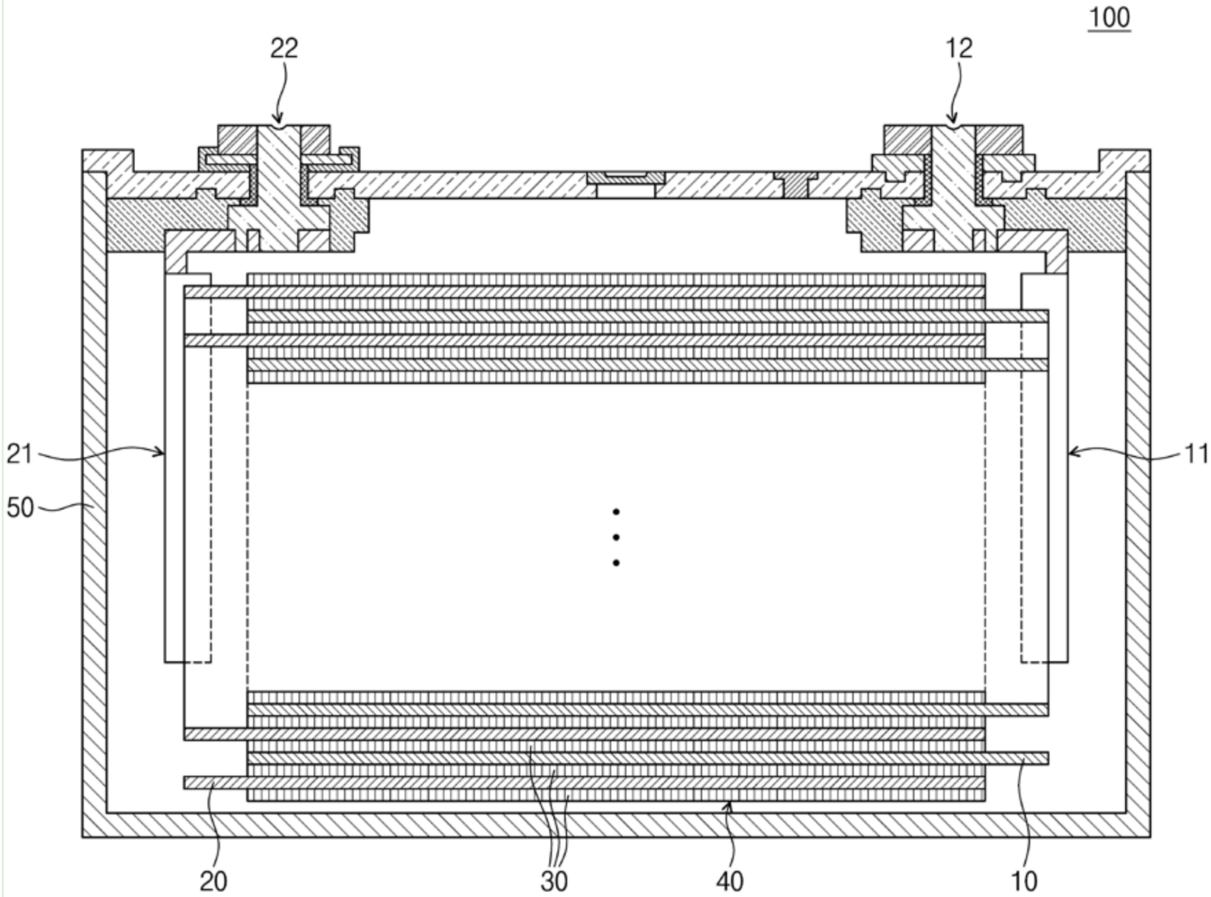

FIG. 4

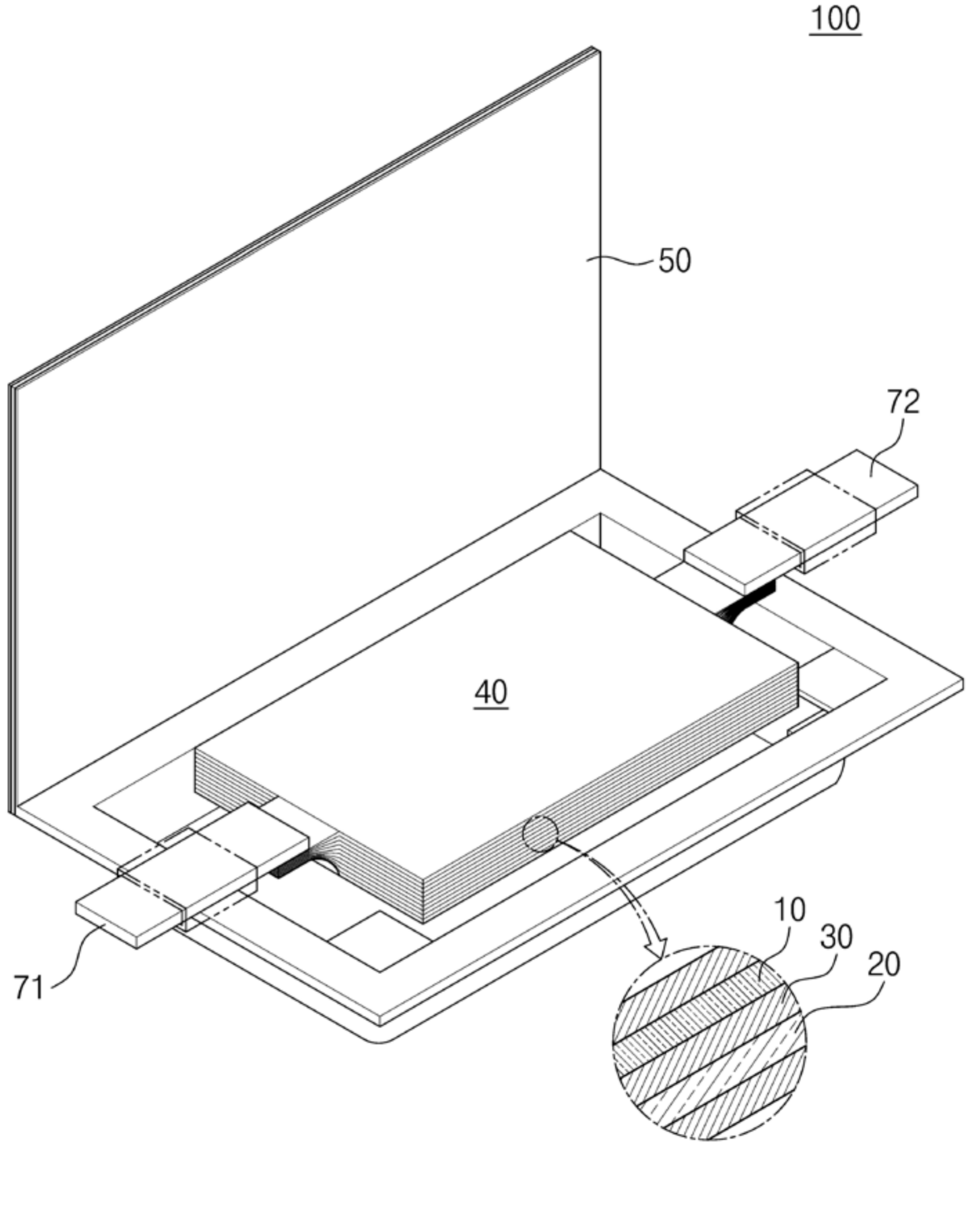

FIG. 5

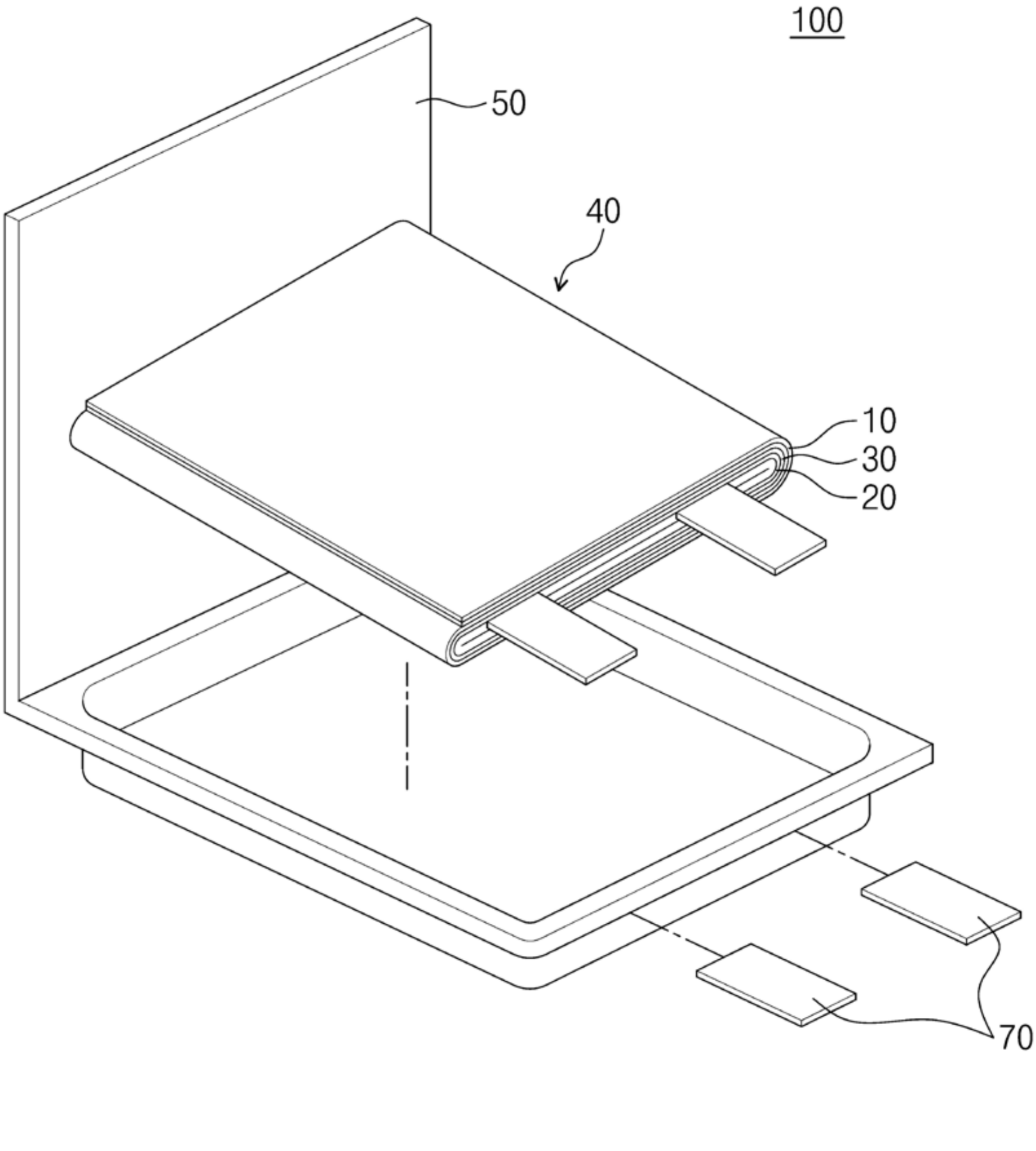

Europäisches Patentamt
European Patent Office
Office européen des brevets

# EUROPEAN SEARCH REPORT

Application Number
EP 25 20 7392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/079650 A1 (PARK HONGRYEOL [KR] ET AL) 7 March 2024 (2024-03-07)<br>* examples 1-3 *<br>* paragraphs [0141] - [0143] *<br>----- | 1-15 | INV.<br>H01M4/131<br>H01M10/0567<br>H01M10/0569 |
| A | US 2021/020991 A1 (NAKAZAWA EIJI [JP]) 21 January 2021 (2021-01-21)<br>* claim 1 *<br>* paragraphs [0110] - [0122] *<br>----- | 1-15 | |

TECHNICAL FIELDS SEARCHED (IPC)

H01M

The present search report has been drawn up for all claims

1

| Place of search | Date of completion of the search | Examiner |
|---|---|---|
| The Hague | 16 February 2026 | Lange, Ronny |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 7392

This annex lists the patent family members relating to the patent documents cited in the above-mentioned European search report. The members are as contained in the European Patent Office EDP file on
The European Patent Office is in no way liable for these particulars which are merely given for the purpose of information.

16-02-2026

| Patent document cited in search report | Publication date | Patent family member(s) | Publication date |
|---|---|---|---|
| US 2024079650 A1 | 07-03-2024 | EP 4328220 A1 | 28-02-2024 |
| | | JP 7664322 B2 | 17-04-2025 |
| | | JP 2024029747 A | 06-03-2024 |
| | | US 2024079650 A1 | 07-03-2024 |
| US 2021020991 A1 | 21-01-2021 | CN 110692160 A | 14-01-2020 |
| | | CN 115986213 A | 18-04-2023 |
| | | EP 3780226 A1 | 17-02-2021 |
| | | JP 7231615 B2 | 01-03-2023 |
| | | JP WO2019189670 A1 | 01-04-2021 |
| | | KR 20200133785 A | 30-11-2020 |
| | | US 2021020991 A1 | 21-01-2021 |
| | | WO 2019189670 A1 | 03-10-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240137953